# DEMANDE DE BREVET EUROPEEN

(11) **EP 1 312 628 A1**
(43) Date de publication de la demande: **21.05.2003**
(21) Numéro de dépôt: 02292271.0
(22) Date de dépôt: 17.09.2002
(51) Int. Cl.: C08F 234/02, C08F 216/14, C08F 214/00, C08F 210/00, G02B 1/04

(54) **Polymère fonctionnel réticulable permettant la fabrication de matériaux conducteurs de la lumière**

(30) Priorité: 19.11.2001 FR 0114940
(71) Demandeur: Atofina, 92800 Puteaux (FR)
(72) Inventeur: Boutevin, Bernard, 34090 Montpellier (FR); Rousseau, Alain, 34090 Montpellier (FR); Sage, Jean-Marc, 69600 Oullins (FR)

(57) **Abrégé**

La présente invention a pour objet un polymère, comprenant trois unités répétitives issues de monomères industriels simples d'accès, transparent, à température de transition vitreuse supérieure à 25°C, partiellement fluoré permettant la réalisation d'articles notamment d'articles servant de guide ou de conducteur de la lumière dans le domaine des longueurs d'ondes de type visible ou proche infra rouge. Ce polymère est utile pour la fabrication de fibre optique.

## Description

La présente invention a pour objet un polymère, transparent, à température de transition vitreuse supérieure à 25°C, partiellement fluoré, fabriqué à partir de monomères industriels simples d'accès, permettant la réalisation d'articles notamment d'articles servant de guide ou de conducteur de la lumière dans le domaine des longueurs d'ondes de type visible ou proche infra rouge. Ce polymère est utile pour la fabrication de fibre optique.

Il est d'un grand intérêt de concevoir un matériau polymère possédant les propriétés nécessaires pour réaliser des fibres optiques. On pourra, à cet effet, se référer à l'article "Polymeric materials for Devices in Optical Fibre Systems"de Anthony R. Blythe et John R. Vinson (Polymers for advanced technologies vol 11, p 601-611, 2000).

Les fibres optiques sont actuellement en grande partie réalisées en silice. Elles présentent des inconvénients majeurs au niveau de la réalisation des connections sur de courtes distances. Ces inconvénients résident dans la difficulté d'établir des connexions entre les fibres elles-mêmes ou entre divers appareils et les fibres ainsi que dans la fragilité de ces connexions lorsqu'elles sont établies.

Le polyméthacrylate de méthyle (PMMA) a été utilisé pour la fabrication de fibres optiques afin de faciliter les connexions entre fibres, mais ce polymère absorbe trop fortement aux longueurs d'ondes employées dans l'utilisation des fibres optiques.

On connaît les polymères perfluorés à base de monomères cycliques perfluorés pour la fabrication de fibres optiques. Cependant, la synthèse de ces monomères perfluorés cycliques est délicate et nécessite l'emploi d'agents de fluoration dangereux ce qui limite fortement leur accessibilité et conduit à un prix de revient très élevé du polymère. Afin de minimiser la quantité de polymère employée et donc les coûts, le diamètre des fibres a été diminué rendant la connexion entre les fibres difficiles à mettre en oeuvre.

La demande EP-A1-990 509 décrit un procédé de fabrication de fibre optique à l'aide d'une résine acrylate composée d'oligomères fonctionnels partiellement fluorés, de type acrylique, difficiles à synthétiser ou de type polyéthers perfluorés linéaires diacrylates présentant une température de transition vitreuse (Tg) très faible et un degré de réticulation limité d'où l'obligation d'adjoindre un diluant réactif acrylate di- ou tri-fonctionnel au moins partiellement fluoré difficile à synthétiser également.

La température de transition vitreuse (Tg) étant la température au-dessus de laquelle des mouvements limités des chaînes polymères sont possibles, sa limitation réduit la stabilité thermique et mécanique des fibres optiques tout comme la limitation du degré de réticulation. La stabilité thermique d'une fibre optique dépend donc de la Tg et du degré de réticulation du polymère utilisé.

La demande WO 00/27782 décrit des oligomères fonctionnels dont la structure est basée sur une chaîne d'unités répétitives -(CF₂-CFX)- dans laquelle X=F, Cl ou Br et pour laquelle la température de transition vitreuse (Tg) est faible et est proche de la température ambiante ne permettant pas d'assurer une parfaite stabilité des propriétés optiques dans les conditions d'utilisation des fibres optiques.

Dans des applications différentes de celle envisagée par la demanderesse, on connaît le document JP-11096832 qui décrit un copolymère chlorotrifluoroéthylène / carbonate de vinylène / t-Butylallylperoxycarbonate capable de réticuler thermiquement. Cette réticulation thermique ne permet pas cependant d'envisager un procédé de mise en forme d'une fibre optique avec une vitesse de réticulation suffisante. De plus, cette réticulation thermique s'accompagne d'une perte de masse du produit, c'est à dire un dégagement de molécules à l'état gazeux qui serait préjudiciable aux propriétés optiques du matériau en provoquant des micro bulles dans la structure du polymère.

La vitesse de réticulation doit être rapide compte tenu de très grandes vitesses de filages nécessaires pour assurer la production industrielle de plusieurs millions de km/an de fibres optiques. Des polymères Chlorotrifluoroéthylène/hydroxyéthylvinyléther/triéthylèneglycolméthylvinyléther sont également décrits dans cette même demande.

Aucun matériau polymère à l'heure actuelle n'est susceptible d'être utilisé de façon satisfaisante pour la fabrication de fibre optique. Les matériaux fluorés ou partiellement fluorés notamment, développés jusqu'à présent, font appel à des monomères fluorés difficiles d'accès soit du fait du grand nombre d'étapes nécessaires pour leur synthèse, soit du fait de l'utilisation d'agents de fluoration ou soit du fait de leurs propriétés thermomécaniques insatisfaisantes.

Il a été trouvé par la demanderesse un polymère fonctionnel transparent, de nature amorphe, susceptible d'être rapidement rendu réticulable sous UV, soluble dans les solvants organiques usuels, de température de transition vitreuse supérieure à la température ambiante et engendrant des coûts de fabrications raisonnables par rapport à l'art antérieur. Ce polymère est obtenu à partir de la copolymérisation de monomères disponibles sur le marché ne nécessitant pas l'emploi de réactifs dangereux pour leur transformation.

L'introduction dans le polymère fonctionnel d'un groupement éthylénique le rend réticulable à tout moment par simple traitement aux UV.

La réticulation de ce copolymère fonctionnel, en présence d'un système amorceur selon des procédés déjà connus et décrits dans la littérature permet la préparation de composants optiques comme les fibres optiques.

L'invention a pour objet un copolymère comprenant au moins trois unités répétitives P1, P2 et P3 de formules générales suivantes : 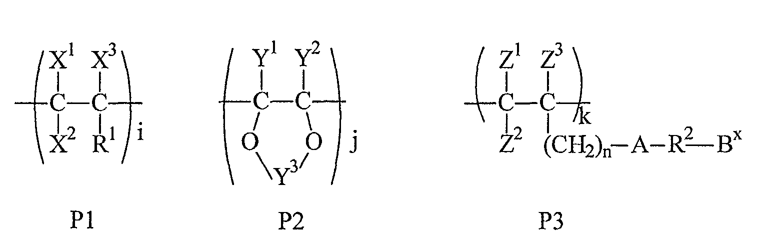 dans lesquelles X¹, X² et X³, identiques ou différents, sont pris dans le groupe d'atomes H, F, Cl et Br ; R¹ est un atome de H, F, Cl ou Br ou un groupement carboné comprenant de 1 à 10 atomes de carbone partiellement ou totalement fluorés ; Y¹ et Y², identiques ou différents, sont pris soit dans le groupe d'atomes comprenant H, F, Cl et Br, soit dans la famille des groupements carbonés comprenant de 1 à 10 atomes de carbone ; Y³ est un groupement carbonyle ou un groupement carboné divalent ; Z¹, Z², Z³, identiques ou différents, sont des atomes d'hydrogène, des groupements carbonés comprenant de 1 à 10 atomes de carbone; n est égal à 0 ou 1 ; A est une fonction ester, un atome d'oxygène ou de soufre ; R² est pris dans le groupe comprenant les groupements hydrocarbonés divalents de 2 à 8 atomes de carbone et les groupements carbonés divalents de 2 à 8 atomes de carbone, partiellement halogénés ; B^{x} est un atome, un groupement ou une fonction ; i, j, et k correspondent à un nombre répétitif d'unités ;
la teneur en unités P3 dans le copolymère étant comprise entre 2 et 40 % en mole, de préférence entre 10 et 20 % et le rapport molaire des unités P1/P2 étant compris entre 0,5 et 5,5, de préférence entre 1 et 2, ledit copolymère étant transparent, de nature amorphe et ayant une température de transition vitreuse (Tg) supérieure à 25°C.

Selon un mode de réalisation du copolymère, sa Tg est comprise entre environ 60 et 90°C lorsque la teneur en motifs P2 dans le copolymère est comprise entre environ 20 et 50 % en mole.

Selon un mode de réalisation du copolymère, sa masse moléculaire (Mn) est comprise entre 500 et 10⁵, de préférence entre 10³ et 10⁴ et plus particulièrement entre 2.10³ et 5.10³.

Selon un mode de réalisation du copolymère, l'unité répétitive P1 est égale à un monomère M1 éthylénique fluoré ou est issu de la polymérisation d'au moins deux monomères M1 de formule générale suivante : 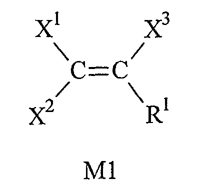 dans laquelle X¹, X² et X³, identiques ou différents, sont pris dans le groupe d'atomes H, F, Cl et Br ; et R¹ est un atome de H, F, Cl ou Br ou un groupement carboné comprenant de 1 à 10 atomes de carbone partiellement ou totalement fluorés.

Selon un mode de réalisation du copolymère, M1 est le tétrafluoroéthylène (TFE) ou le chlorotrifluoroéthylène (CTFE).

Selon un mode de réalisation du copolymère, l'unité répétitive P2 est égale à un monomère M2 ou est issu de la polymérisation d'au moins deux monomères M2 de formule générale suivante: 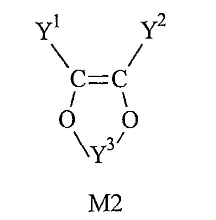 dans laquelle Y¹ et Y², identiques ou différents, sont pris soit dans le groupe d'atomes comprenant H, F, Cl et Br, soit dans la famille des groupements carbonés comprenant de 1 à 10 atomes de carbone et Y³ est un groupement carbonyle ou un groupement carboné divalent.

Selon un mode de réalisation du copolymère, M2 est le carbonate de vinylène (VCA).

Selon un mode de réalisation du copolymère, l'unité répétitive P3 est égale à un monomère M3 ou est issu de la polymérisation d'au moins deux monomères M3 de formule générale suivante: 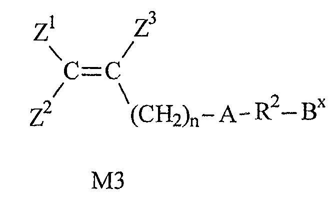 dans laquelle Z¹, Z², Z³, identiques ou différents, sont des atomes d'hydrogène, des groupements carbonés comprenant de 1 à 10 atomes de carbone; n est égal à 0 ou 1 ; A est une fonction ester, un atome d'oxygène ou de soufre ; R² est pris dans le groupe comprenant les groupements hydrocarbonés divalents de 2 à 8 atomes de carbone et les groupements carbonés divalents de 2 à 8 atomes de carbone, partiellement halogénés ; B^{x} est un atome, un groupement ou une fonction.

Selon un mode de réalisation du copolymère, B^{x} est égal à B¹ pris dans le groupe comprenant un atome de chlore, de brome, d'iode, une fonction hydroxyle et une fonction hydroxyle modifiée par un groupement protecteur.

Selon un mode de réalisation du copolymère, M3 est l'éthylèneglycolvinyléther (EGVE) ou le butanediolvinyléther ou leur forme protégée.

Selon un mode de réalisation du copolymère, le groupement B^{x} est égal à un groupement B² photoréticulable .

Selon un mode de réalisation du copolymère, B² est un groupement choisi parmi:

-O-CO-CH=CH₂ , -O-CO-C(CH₃)=CH₂ , -O-CH=CH₂ et -O-CH=CH-CH₃ (cis et trans).

L'invention est également relative à un article fabriqué en un matériau comprenant un copolymère tel que décrit précédemment.

L'invention est également relative à une fibre optique à base de copolymère tel que décrit précédemment.

Le copolymère fonctionnel selon l'invention est constitué par au moins trois unités répétitives P1, P2 et P3, représentées ci-dessus, issues de la polymérisation des monomères respectivement M1, M2 et M3. 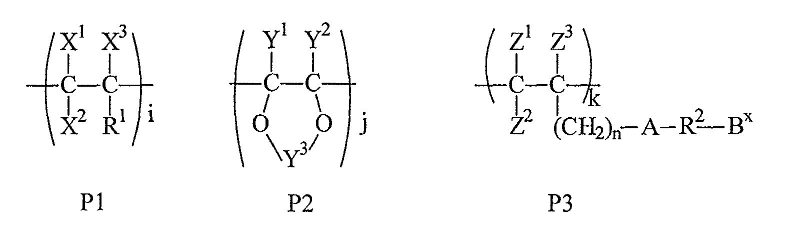 I, j, et k correspondent à un nombre répétitif d'unités.

Le monomère M1, donnant lieu aux entités répétitives P1, est un monomère pris dans le groupe des monomères de formule générale représentée ci-dessous, totalement ou partiellement fluorés ou alors chlorofluorés : 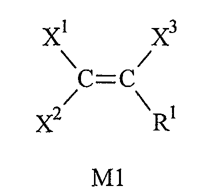 avec les atomes X¹, X² et X³, identiques ou différents, pris dans le groupe d'atomes comprenant H, F, Cl et Br et avec R¹ pouvant être un atome, en quel cas, pris dans le groupe d'atomes comprenant H, F, Cl, et Br ou pouvant être un groupement carboné comprenant de 1 à 10 atomes de carbone totalement ou partiellement fluorés.

Les unités répétitives P1 peuvent être issues d'un ou de plusieurs monomères de formule M1 pris dans le groupe tel que décrit précédemment. De préférence, on choisira les monomères M1 perfluorés ou chlorofluorés et particulièrement le tétrafluoroéthylène (abrégé TFE) et le chlorotrifluoroéthylène (abrégé CTFE). A titre d'exemple, M1 peut également être un composé dont X¹=X²=X³=F et R¹=H, ou un composé dont X¹=X²=H et X³=R¹=F, ou encore un composé dont X¹=X²=X³=F et R¹=CF₃.

Le monomère M2, donnant lieu aux unités répétitives P2, est un monomère de structure cyclique de formule générale : 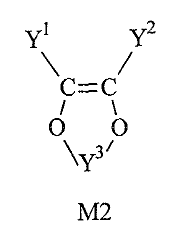 avec Y¹ et Y² identiques ou différents pris soit dans le groupe d'atomes comprenant H, F, Cl et Br, soit dans la famille des groupements carbonés comprenant de 1 à 10 atomes de carbone. A titre d'exemple, on peut citer les composés dont Y¹=Y²=F, dont Y¹=H et Y²=Cl, dont Y¹=H et Y²=F et les composés dont Y¹=Cl et Y²=Cl.
Y³ est soit un groupement carbonyle, soit un groupement carboné divalent tel que par exemple : -CH₂-, -CH(CH₃)- et -C(CH₃)₂-. De préférence, le monomère M2 est le vinylène carbonate (VCA) dans lequel Y³ est un groupement carbonyle et Y¹ et Y² sont des atomes d'hydrogène.

Les unités répétitives P3 sont issues du monomère M3 représenté par la formule générale suivante : 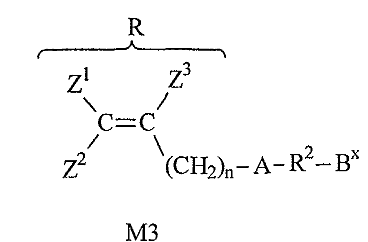 dans laquelle Z¹, Z² et Z³ sont identiques ou différents. Z¹, Z² et Z³ sont soit un atome d'H, soit pris dans le groupe comprenant les groupements carbonés comprenant de 1 à 10 atomes de carbone; n est égal à 0 ou 1 ; A est soit une fonction ester telle que M3 corresponde à l'une des deux formules M3' et M3"ci-dessous : 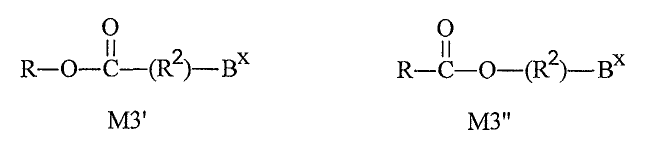 soit un atome pris dans le groupe comprenant l'oxygène et le soufre ; R² est pris dans le groupe comprenant les groupements alkyles divalents de 2 à 8 atomes de carbone et les groupements alkyles partiellement halogénés par F et/ou Cl et divalents de 2 à 8 atomes de carbone; B^{x} est égale à B¹ pris dans le groupe comprenant un atome de Cl, Br, I, une fonction hydroxyle et une fonction hydroxyle modifiée par un groupement protecteur qui peut être, par exemple, un groupe triméthylsilane ou un groupe mésityle.

Plus particulièrement, on préfère les monomères M3 pour lesquels Z¹, Z² et Z³ sont des atomes d'hydrogène, n=0, A est un atome d'oxygène, R² est une chaîne linéaire hydrocarbonée de 2 à 4 atomes de carbone et B¹ est une fonction alcool primaire ou une fonction alcool primaire modifié par un groupement protecteur tel que le groupement triméthylsilane ou mésityle.

Après copolymérisation des monomères M3, on peut transformer le groupement B¹ des monomères M3 du copolymère par une ou des réactions chimiques connues de l'homme de l'art, en un groupement B² , réticulable sous UV, de type (méth)acrylate ou vinyléther, conduisant à l'obtention de l'unité P3.

B² est un groupement pris parmi :

-O-CO-CH=CH₂, -O-CO-C(CH₃)=CH₂, -O-CH=CH₂ et -O-CH=CH-CH₃(cis et trans).

La transformation du groupement B¹ du polymère obtenu à l'issu de la polymérisation des monomères M1, M2 et M3 en fonction acrylate, lorsque B¹ est une fonction hydroxyle, peut être obtenue selon les voies classiques de la synthèse organique à partir de chlorures d'acide, d'anhydrides ou bien encore par réaction de transestérification avec un (méth)acrylate de méthyle ou d'éthyle ou bien encore par réaction directe de l'acide sur l'alcool B¹ avec élimination de l'eau formée.

Comme procédé permettant d'obtenir le polymère, on peut utiliser tout procédé de polymérisation connu de l'homme de l'art : en milieu solvant, en suspension ou en émulsion dans l'eau par exemple. On préfèrera généralement travailler en milieu solvant afin de contrôler l'exothermicité de la polymérisation et favoriser un mélange intime des différents monomères. Parmi les solvants couramment utilisés, on peut citer: l'acétate d'éthyle, de méthyle ou encore de butyle, les solvants chlorés ou chlorofluorés comme, par exemple, le F141b® (CFCl₂-CH₃) ou le CF₃-CH₂-CF₂-CH₃.

Comme initiateur de polymérisation, on peut employer des générateurs de radicaux libres tels que les peroxydes, hydroperoxydes, percarbonates ou encore des composés azo comme l'azoisobutyronitrile (AIBN) ou ses dérivés fonctionnalisés permettant ensuite d'introduire une fonctionnalité acrylate en bout de chaîne. On peut également dans les cas de procédés menés en milieu aqueux utiliser des générateurs de radicaux libres inorganiques comme les persulfates ou des combinaisons dites rédox.

Afin de mieux contrôler la composition du polymère, il est également possible d'introduire en tout ou partie les monomères ainsi que l'initiateur de polymérisation de façon continue ou par fraction au cours de la polymérisation. La température de polymérisation est dictée, en général, par la vitesse de décomposition du système initiateur choisi et est en général située entre 0 et 200°C plus particulièrement entre 40 et 120°C. La pression est en général comprise entre la pression atmosphérique et une pression de 50 bars, plus particulièrement entre 2 et 20 bars.

La réaction peut être menée en présence d'un stabilisant du monomère fonctionnel M3, sans porter préjudice à l'invention. Lorsque ce monomère comprend : A un atome d'oxygène, n=0, B¹ une fonction alcool primaire, on peut employer un stabilisant afin d'éviter une réaction secondaire au sein du monomère M3 entraînant sa dégradation. Les stabilisants sont des composés de type hydrogéno ou dihydrogénophosphate, hydrogénocarbonate ou tout autre composé de type époxyde, susceptibles d'empêcher cette réaction secondaire. Ce stabilisant est présent dans des quantités de l'ordre de 0,01 à 10 % molaire par rapport au monomère M3. Afin d'éviter cette réaction secondaire au sein du monomère M3, on peut également protéger au préalable la fonction B¹ alcool primaire par un groupement protecteur de type trialkylsilyle ou mésityle en employant des méthodes connues dans le domaine de la chimie.

Après polymérisation des comonomères M1, M2, M3, on rétablit la fonction alcool primaire par un traitement avec un composé présentant un hydrogène labile (H₂O, CH₃OH par exemple).

La maîtrise de la masse moléculaire du copolymère est obtenue en contrôlant la longueur de la chaîne du copolymère. Le but de cette maîtrise est de permettre l'ajustement de la solubilité de la chaîne de copolymère dans un solvant ou un diluant réactif acrylique et également de contrôler la viscosité finale de ce mélange afin d'obtenir des valeurs de viscosité compatibles avec le procédé ultérieur de mise en oeuvre du copolymère.

Afin de contrôler la longueur de chaînes macromoléculaires, comprenant les entités P1, P2 et P3, on peut ajouter, lors de la copolymérisation des monomères M1, M2 et M3, un agent appelé limiteur de chaîne ou agent de transfert dont l'utilisation est bien connue en chimie de polymérisation. Le solvant utilisé peut également avoir un rôle de limiteur de chaîne suivant sa nature chimique. Parmi les limiteurs de chaînes connus de l'homme de l'art on peut citer par exemple les dérivés halogénés comme le CCl₄, le CHCl₃, les phosphites comme H-PO(OEt)₂, les alcools ou les éthers possédant des hydrogènes sur le carbone en alpha de l'atome d'oxygène, les esters comme l'acétate d'éthyle.

Le polymère selon l'invention a une masse moléculaire (Mn) comprise entre 500 et 10⁵, de préférence entre 10³ et 10⁴ et tout particulièrement entre 2.10³ et 5.10³.

La teneur en unités P3 fonctionnels dans le copolymère comprenant les unités P1, P2 et P3, c'est à dire le pourcentage molaire exprimé par (k/(i+j+k) x 100), peut varier entre 2 et 40 % en mole et de préférence entre 10 et 20 %. Cette teneur détermine le degré de réticulation au moment de la mise en oeuvre.

Le rapport des unités P1/P2, c'est à dire le rapport (i/j),peut varier de 0,5 à 5 ,5 et se situe de préférence entre 1 et 2. Ce rapport, et plus particulièrement la teneur en motifs P2, influe sur la température de transition vitreuse (Tg) du polymère.

Nous allons maintenant illustrer l'invention en présentant des exemples de réalisation de l'invention.

Les abréviations suivantes correspondent à :

| | |
|---|---|
| **CTFE** | Chlorotrifluoroéthylène CF₂=CFCl |
| **EGVE** | Ethylèneglycolvinyléther CH₂=CH-O-CH₂-CH₂-OH |
| **EGVE-TMS** | CH₂=CH-O-CH₂-CH₂-O-Si(CH₃)₃ |
| **BDVE** | butanediolvinyléther ou **HBVE** pour 4-hydroxybutylvinyl- |
| | éther CH₂=CH-O-CH₂-CH₂-CH₂-CH₂-OH |
| **VCA** | carbonate de vinylène |

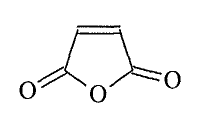

| | |
|---|---|
| **TBPP** | perpivalate de tertiobutyle à 75 % dans l'isododécane |
| **EMHQ** | 4-méthoxy-phénol |
| **DAROCUR 1173®** | 2-hydroxy-2 méthylpropiophénone |
| **Tg** | Température de transition vitreuse |
| **Mn** | Masse moléculaire |

Les masses moléculaires moyennes en nombre (Mn) sont déterminées par analyse CES (chromatographie d'exclusion stérique). On utilise un appareillage de la société Spectra Physic << Winner Station >>. La détection est effectuée par indice de réfraction. La colonne est une colonne mixed C PL gel de 5 microns de la société Polymer Laboratory et le solvant utilisé est le THF à un débit de 0,8 ml/min. Les masses moléculaires moyennes en nombre (Mn) sont exprimées en g/moles par rapport à un standard polystyrène.

Les températures de transition vitreuse (Tg) sont déterminées par calorimétrie différentielle à balayage (DSC acronyme anglais). On effectue une première montée en température à 20°C/min, suivie d'un refroidissement, puis une deuxième montée en température au cours de laquelle sont relevées les températures de transition vitreuse (Tg) ou les températures de fusion (Tf) selon les cas. La plage de température est soit de -20°C à 80°C si la Tg est inférieure à 60°C, soit de 50°C à 200°C si la Tg est supérieure à 60°C.

Les taux de chlore sont déterminés de façon classique par minéralisation en bombe de PARR puis dosage des chlorures par argentimétrie.

Les dosages des fonctions hydroxyles sont effectués par la méthode de Bryant et al (J. Am. Chem. Soc. Vol 62, 1, 1940) décrite par Stig Veibel dans « The Determination of Hydroxyl Groups ed. R. Belcher and D. M. W. ANDERSON, Academic Press, London and New York, 1972 (p 86 et 129) ». Les fonctions alcools sont acétylées par un complexe BF₃/CH₃COOH, puis l'eau formée est dosée en retour par un titrage potentiométrique de type Karl Fisher. Le solvant, paradioxane, cité dans la méthode a été remplacé par l'acétonitrile. Les résultats sont exprimés en milli-équivalents de fonction OH par gramme de polymère (méq/g).

Pour l'Irradiation UV, on emploie un convoyeur Fusion UV LC-6 muni d'un système de traitement UV fusion F300S qui est doté d'une lampe « bulb H » de 214 W (longueur d'onde de 351 à 400 nm). La vitesse de défilement du convoyeur correspond à un temps d'exposition de 300 ms au rayonnement ultra violet pour un passage.

### COMPARATIF 1

### [CTFE/EGVE : M1/M3]

On opère dans un réacteur en acier inox de 160 ml. Une fois le réacteur fermé, on effectue deux à trois purges avec 5 bars d'azote. Le réacteur est alors mis sous vide (environ 100 mbars) et on introduit ensuite par aspiration 50 ml d'une solution d'acétate d'éthyle contenant 0,4 ml d'initiateur TBPP (1,5 mmoles) et 3,8 g d'EGVE (M3 ; 43 mmoles). On introduit ensuite 5 g de CTFE (M1 ; 43 mmoles). Le réacteur est fermé et l'on porte la température à 70°C pendant 4 h sous agitation, la pression initiale est d'environ 5 bars. Après réaction, le contenu de l'autoclave est évaporé jusqu'à obtenir un volume d'environ 10-20 ml puis la masse réactionnelle est précipitée avec du n-heptane. Le copolymère précipité est séparé puis séché sous vide.

On recueille ainsi 2,6 g d'un polymère d'aspect pâteux, présentant une Tg inférieure à 40°C.

### EXEMPLE 2

### [CTFE/VCA/EGVE-TMS : M1/M2/M3 dans l'acétate d'éthyle]

On opère dans un réacteur en acier inox de 160 ml. Le réacteur est fermé puis l'on effectue deux à trois purges avec 5 bars d'azote. On met alors le réacteur sous vide (environ 100 mbars) et on introduit par aspiration 50 ml d'une solution d'acétate d'éthyle contenant 0,4 ml d'initiateur TBPP (1,5 mmoles), 2,1 g d'EGVE-TMS (M3 ; 13 mmoles) et 2,6 g de VCA (M2 ; 30 mmoles). On introduit ensuite 5 g de CTFE (M1 ; 43 mmoles). Le réacteur est fermé et on porte la température à 70°C pendant 4h sous agitation avec une pression initiale d'environ 5 bars. Après réaction, le contenu de l'autoclave est évaporé jusqu'à obtenir un volume d'environ 10-20 ml et on ajoute 50 ml de méthanol pour déprotéger la fonction alcool de P3. On laisse sous agitation pendant 12h à température ambiante puis la masse réactionnelle est à nouveau évaporée jusqu'à obtenir un volume d'environ 20 ml et précipitée avec du n-heptane. Le copolymère P1/P2/P3 précipité est séparé puis séché sous vide. On obtient ainsi 5 g de copolymère soluble dans les solvants usuels (acétonitrile, THF).

Les analyses du copolymère obtenu sont reportées ci-après :
- Rapport molaire motifs P2/P3 déterminé par ¹H RMN = 0,20
- Tg : 50°C
- Mn = 7900

Une deuxième expérience similaire à celle de l'exemple 2 à permis de mesurer un taux de chlore égal à 18,0 % avec un rapport en motifs P2/P3 comparable (égal à 0,25), ce qui conduit à une composition molaire en motifs P1/P2/P3, pour le copolymère de l'exemple 2, estimée à 52/10/38.

### EXEMPLE 3

### [CTFE/VCA/EGVE-TMS : M1/M2/M3 dans l'acétate d'éthyle]

On opère dans un réacteur en acier inox de 160 ml. Le réacteur est fermé puis on effectue deux à trois purges avec 5 bars d'azote. On met alors le réacteur sous vide (environ 100 mbar) et on introduit par aspiration 50 ml d'une solution d'acétate d'éthyle contenant 0,4 ml d'initiateur TBPP (1,5 mmoles), 2,1 g d'EGVE-TMS (M3 ; 13 mmoles) et 5,03 g de VCA (M2 ; 58 mmoles). On introduit ensuite 7 g de CTFE (M1 ; 60 mmoles). On porte la température à 70°C pendant 4 h sous agitation avec une pression initiale d'environ 5 bars. Après réaction, le contenu de l'autoclave est évaporé jusqu'à obtenir un volume d'environ 10-20 ml et on ajoute 50 ml de méthanol pour déprotéger la fonction alcool de P3. On laisse sous agitation pendant 12h à température ambiante puis la masse réactionnelle est à nouveau évaporée jusqu'à obtenir un volume d'environ 20ml. Elle est précipitée avec du n-heptane. Le copolymère P1/P2/P3 précipité est séparé puis séché sous vide. On obtient ainsi 5 g de copolymère soluble dans les solvants usuels (acétonitrile, THF).

Les analyses du copolymère obtenu sont reportées ci-après :
- Rapport molaire motifs P2/P3 déterminé par ¹H RMN = 1
- Tg : 62°C
- Mn = 5700
- [OH] = 1,6 méq/g

### EXEMPLE 4

### [CTFE/VCA/EGVE-TMS : M1/M2/M3 dans le F141b®]

On opère de la même manière que dans l'exemple 2 précédemment décrit, mais en utilisant le solvant F141b® (CFCl₂-CH₃) en lieu et place de l'acétate d'éthyle. Les quantités mises en jeu sont 5,23 g de VCA (M2 ; 61 mmoles), 4,2 g d'EGVE-TMS (M3 ; 26 mmoles), 0,4 ml d'initiateur TBPP (1,5 mmoles) et 10 g de CTFE (M1 ; 86 mmoles). On obtient ainsi 10,3 g d'un copolymère P1/P2/P3 transparent et soluble dans l'acétonitrile.

Les analyses du copolymère obtenu sont reportées ci-après :
- Taux massique de chlore : 16,0 %
- Rapport molaire VCA/EVGE (motifs P2/P3) déterminé par ¹H RMN = 0,83 soit une composition molaire en motifs P1/P2/P3 estimée à 45/25/30
- Tg : 74°C
- [OH] = 1,8 méq/g

### EXEMPLE 5

### [CTFE/VCA/EGVE-TMS : M1/M2/M3 dans le F141b® avec HPO(OEt)₂]

On opère dans un réacteur en acier inox de 300 ml. Le réacteur est fermé, puis on effectue deux à trois purges avec 5 bars d'azote. On met alors le réacteur sous vide (environ 100 mbars) et on introduit par aspiration 150 ml d'une solution de F141b® contenant 1,5 ml d'initiateur TBPP (5,6 mmoles), 12,6 g d'EGVE-TMS (M3 ; 78 mmoles), 15,6 g de VCA (M2 ; 182 mmoles) et 7,2 g de diéthyle phosphite (52 mmoles). On introduit ensuite 30,5 g de CTFE (M1 ; 257 mmoles). Le réacteur est fermé et on porte la température à 70°C pendant 4h sous agitation, la pression initiale étant d'environ 10 bars. Après réaction, le contenu de l'autoclave est évaporé jusqu'à obtenir un volume d'environ 50 ml et on ajoute 100 ml de méthanol pour déprotéger la fonction alcool de P3. On laisse sous agitation pendant 2h à température ambiante puis la masse réactionnelle est à nouveau évaporée, reprise à l'acétone (150 ml) et précipitée par addition d'eau. Le copolymère P1/P2/P3 précipité est séparé puis séché sous vide.

On obtient ainsi 46 g de copolymère incolore, transparent et soluble dans les solvants usuels (acétone, acétonitrile, THF).

Les analyses sont indiquées ci-après:
- Pourcentage massique de chlore : 17,1 %
- Rapport molaire P2/P3 déterminé par ¹H RMN = 2 ce qui conduit à la composition molaire en motifs P1/P2/P3 estimée à 49/34/17.
- Tg = 75°C
- Mn = 4,6.10³
- [OH] = 1,5 méq/g

On a rassemblé les résultats précédents dans le **TABLEAU 1** ci-après.

Le comparatif 10 est un copolymère issu de la polymérisation de CTFE (M1) et VCA (M2), avec un rapport molaire P1/P2 = 1.

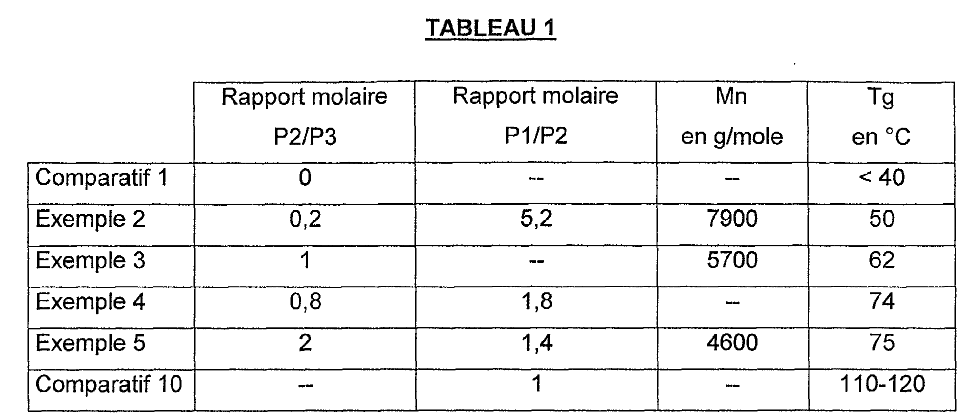

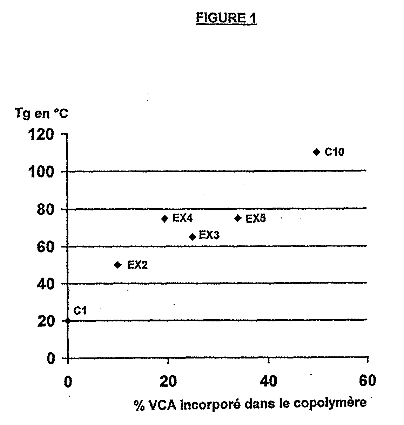

Le graphique de la figure 1 représente la température de transition vitreuse (Tg) en °C en fonction du % molaire de carbonate de vinylène (VCA) incorporé dans le copolymère selon l'invention. On constate que la Tg augmente avec le % de VCA et qu'elle est comprise entre environ 60 et 90°C lorsque la teneur en motif P2 est comprise entre environ 20 et 50 % en mole.

### EXEMPLE 6

### [Acrylation de la fonction alcool primaire de P3 par le chlorure d'acryloyle]

Dans un réacteur en verre de 250 ml équipé d'une garde desséchante au chlorure de calcium, on dissout 30 g de polymère, préparé dans l'exemple 3, dans 90 ml d'acétonitrile sec (teneur en eau inférieure à 500 ppm). On ajoute 200 ppm d'EMHQ et on introduit, au goutte à goutte à 20°C, 20 g de chlorure d'acryloyle. On porte ensuite à 40°C pendant 2 h. On ajoute ensuite 5-10 ml de méthanol, puis on précipite le copolymère dans l'eau. Le copolymère ainsi obtenu est séché puis redissout dans l'acétonitrile pour être à nouveau précipité à l'eau. Après séchage, on obtient 25 g de copolymère sec.

L'analyse infra rouge montre l'apparition des bandes acrylates caractéristiques.

### EXEMPLE 7

### [CTFE/VCA/HBVE : M1/M2/M3 dans le F141b®]

1^{ére} étape : Dans un réacteur en acier inox, on introduit une solution composée de :
- 6,1 g de VCA (M2 ; 71 mmoles) ;
- 2,8 g de diéthylphosphite (20,8 mmoles) ;
- 5,7 g de HBVE (M3 ; 30,3 mmoles), dont la fonction alcool est protégée par un goupement triméthylsilane. Le 4-hydroxybutylvinyléther est préparé préalablement par réaction du vinyléther sur l'hexaméthyldisilazane;
- 1,5 g d'initiateur TBPP ;et
- 80 ml de solvant F141b®.

On introduit ensuite 12 g de CTFE (M1 ; 103 mmoles) et on porte le système sous pression autogène à 70°C pendant 4 heures sous agitation. Après réaction, le contenu de l'autoclave est évaporé (30 mbars à température ambiante). On ajoute 250 ml de méthanol pour déprotéger la fonction alcool et on agite pendant deux heures. Le milieu réactionnel est à nouveau évaporé et on effectue une purification par dissolution dans l'acétonitrile puis précipitation au n-heptane. On obtient après séchage sous vide (20°C, 10 mbars) 20 g d'un oligomère incolore soluble dans les solvants usuels comme l'acétone ou le THF.

L'analyse ¹H RMN indique un rapport P2/P3 de 1,5 et l'analyse par CES indique une Mn = 3100 g/mole.

2^{nde} étape : On opère comme dans l'**exemple 6** en utilisant 18,6 g de copolymère préparé précédemment dans l'étape 1 dans 55 ml de solvant acétonitrile et on utilise 9,9 g de chlorure d'acide acrylique (121 mmoles). Après deux purifications par dissolution dans l'acétone et précipitation à l'eau, on obtient 10 g d'oligomère fonctionnalisé.

L'analyse RMN montre la formation des fonctions acrylates, de même que l'analyse infra rouge (1720 cm⁻¹, C=O, acrylate ; 1676 cm⁻¹, C=C, acrylate ; 802 cm⁻¹, C=C, acrylate). L'analyse par CES indique une Mn = 4800 g/mole.

3^{ème} étape : 1,98 g du polymère de étape 2 précédente est mis en solution dans 15 ml de 1,1,2-trichloroéthane avec 0,11 g de photoamorçeur DAROCUR 1173®. Environ 1 ml de cette solution est déposé dans une coupelle en aluminium (diamètre 5 cm) puis le solvant est évaporé afin de préparer un film. Ce film est alors exposé sous UV. Au bout de trois passages durant 300 ms, on constate la disparition des bandes acrylates en analyse infra-rouge. Le produit ainsi obtenu devient insoluble dans les solvants usuels (acétone), ce qui indique une réticulation de la matrice.

Une réaction témoin, menée sans photoamorçeur, montre que l'oligomère ne réticule pas, les bandes acrylates sont toujours présentes sur le spectre infra-rouge et le produit reste soluble dans l'acétone après exposition UV.

De même un contrôle mené sur ce polymère montre que les bandes acrylate restent stables à 54°C pendant 4h. Ceci démontre bien que le polymère réticule par initiation photochimique et non par un processus thermique ou de dégradation.

### EXEMPLE 8

On utilise un mélange comprenant en masse 50 % du polymère issu de l'**étape 1** de l'**exemple 7** précédent et 50 % d'acrylate de trifluoroéthyle comme diluant réactif. Les deux produits forment en mélange une résine transparente et liquide. Ce mélange est mis en solution dans le 1,1,2 trichloroéthane en présence du même photoamorçeur que dans l'**étape 3** de l'**exemple 7**. Après un seul passage sous UV pendant 300 ms, on observe une réticulation conduisant à la disparition des bandes acrylate par infra-rouge et une insolubilité du produit obtenu après irradiation UV.

## Revendications

1. Copolymère, **caractérisé en ce qu'**il comprend au moins trois unités répétitives P1, P2 et P3 de formules générales suivantes : 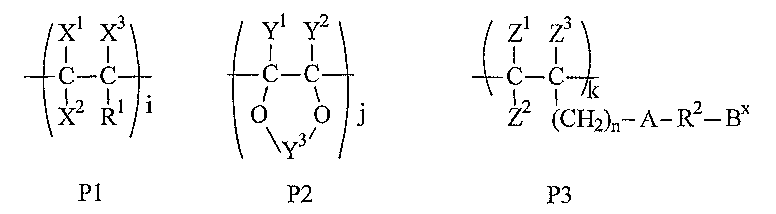 dans lesquelles X¹, X² et X³, identiques ou différents, sont pris dans le groupe d'atomes H, F, Cl et Br ; R¹ est un atome de H, F, Cl ou Br ou un groupement carboné comprenant de 1 à 10 atomes de carbone partiellement ou totalement fluorés ; Y¹ et Y², identiques ou différents, sont pris soit dans le groupe d'atomes comprenant H, F, Cl et Br, soit dans la famille des groupements carbonés comprenant de 1 à 10 atomes de carbone ; Y³ est un groupement carbonyle ou un groupement carboné divalent ; Z¹, Z², Z³, identiques ou différents, sont des atomes d'hydrogène, des groupements carbonés comprenant de 1 à 10 atomes de carbone; n est égal à 0 ou 1 ; A est une fonction ester, un atome d'oxygène ou de soufre ; R² est pris dans le groupe comprenant les groupements hydrocarbonés divalents de 2 à 8 atomes de carbone et les groupements carbonés divalents de 2 à 8 atomes de carbone, partiellement halogénés ; B^{x} est un atome, un groupement ou une fonction ; i, j, et k correspondent à un nombre répétitif d'unités ;
la teneur en unités P3 dans le copolymère étant comprise entre 2 et 40 % en mole, de préférence entre 10 et 20 % et le rapport molaire des unités P1/P2 étant compris entre 0,5 et 5,5, de préférence entre 1 et 2, ledit copolymère étant transparent, de nature amorphe et ayant une température de transition vitreuse (Tg) supérieure à 25°C.

2. Copolymère selon la revendication 1, **caractérisé en ce que** sa Tg est comprise entre environ 60 et 90°C lorsque la teneur en motif P2 dans le copolymère est comprise entre environ 20 et 50 % en mole.

3. Copolymère selon la revendication 1 ou 2, **caractérisé en ce que** sa masse moléculaire (Mn) est comprise entre 500 et 10⁵, de préférence entre 10³ et 10⁴ et plus particulièrement entre 2.10³ et 5.10³.

4. Copolymère selon l'une des revendications précédentes, **caractérisé en ce que** l'unité répétitive P1 est égale à un monomère M1 éthylénique fluoré ou est issu de la polymérisation d'au moins deux monomères M1 de formule générale suivante : 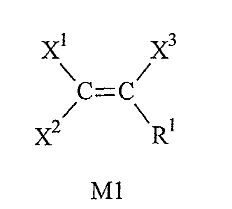 dans laquelle X¹, X² et X³, identiques ou différents, sont pris dans le groupe d'atomes H, F, Cl et Br ; et R¹ est un atome de H, F, Cl ou Br ou un groupement carboné comprenant de 1 à 10 atomes de carbone partiellement ou totalement fluorés.

5. Copolymère selon la revendication 4, **caractérisé en ce que** M1 est le tétrafluoroéthylène (TFE) ou le chlorotrifluoroéthylène (CTFE).

6. Copolymère selon l'une des revendications précédentes, **caractérisé en ce que** l'unité répétitive P2 est égale à un monomère M2 ou est issu de la polymérisation d'au moins deux monomères M2 de formule générale suivante : 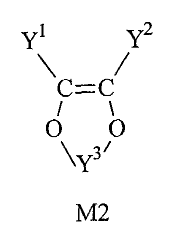 dans laquelle Y¹ et Y², identiques ou différents, sont pris soit dans le groupe d'atomes comprenant H, F, Cl et Br, soit dans la famille des groupements carbonés comprenant de 1 à 10 atomes de carbone et Y³ est un groupement carbonyle ou un groupement carboné divalent.

7. Copolymère selon la revendication 6, **caractérisé en ce que** M2 est le carbonate de vinylène (VCA).

8. Copolymère selon l'une des revendications précédentes, **caractérisé en ce que** l'unité répétitive P3 est égale à un monomère M3 ou est issu de la polymérisation d'au moins deux monomères M3 de formule générale suivante: 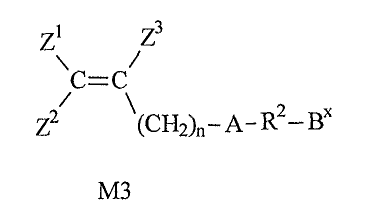 dans laquelle Z¹, Z², Z³, identiques ou différents, sont des atomes d'hydrogène, des groupements carbonés comprenant de 1 à 10 atomes de carbone; n est égal à 0 ou 1 ; A est une fonction ester, un atome d'oxygène ou de soufre ; R² est pris dans le groupe comprenant les groupements hydrocarbonés divalents de 2 à 8 atomes de carbone et les groupements carbonés divalents de 2 à 8 atomes de carbone, partiellement halogénés ; B^{x} est un atome, un groupement ou une fonction.

9. Copolymère selon la revendication 8, **caractérisé en ce que** B^{x} est égal à B¹ pris dans le groupe comprenant un atome de chlore, de brome, d'iode, une fonction hydroxyle et une fonction hydroxyle modifiée par un groupement protecteur.

10. Copolymère selon la revendication 9, **caractérisé en ce que** M3 est l'éthylèneglycolvinyléther (EGVE) ou le butanediolvinyléther ou leur forme protégée.

11. Copolymère selon la revendication 8, **caractérisé en ce que** le groupement B^{x} est égal à un groupement B² photoréticulable.

12. Copolymère selon la revendication 11, **caractérisé en ce que** B² est un groupement choisi parmi : -O-CO-CH=CH₂ , -O-CO-C(CH₃)=CH₂ , -O-CH=CH₂ et -O-CH=CH-CH₃ (cis et trans)

13. Article fabriqué en un matériau comprenant un copolymère selon l'une quelconque des revendications précédentes.

14. Fibre optique à base de copolymère selon l'une des revendications 1 à 12.
